(19) Europäisches Patentamt / European Patent Office / Office européen des brevets

(11) **EP 4 299 520 A1**

(12) **EUROPEAN PATENT APPLICATION**
published in accordance with Art. 153(4) EPC

(43) Date of publication:
**03.01.2024 Bulletin 2024/01**

(21) Application number: **22780334.3**

(22) Date of filing: **22.03.2022**

(51) International Patent Classification (IPC):
**C01B 33/18** *(2006.01)*   **C01B 33/12** *(2006.01)*

(52) Cooperative Patent Classification (CPC):
**C01B 33/12; C01B 33/18**

(86) International application number:
**PCT/JP2022/013251**

(87) International publication number:
**WO 2022/210119 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021060913**

(71) Applicant: **Denka Company Limited
Tokyo 103-8338 (JP)**

(72) Inventors:
• **MINAMIKAWA, Takaaki
Tokyo 103-8338 (JP)**
• **SHIOTSUKI, Hiroyuki
Tokyo 103-8338 (JP)**
• **MIYAZAKI, Koji
Tokyo 103-8338 (JP)**

(74) Representative: **Gulde & Partner
Patent- und Rechtsanwaltskanzlei mbB
Wallstraße 58/59
10179 Berlin (DE)**

(54) **SILICON DIOXIDE POWDER**

(57)    A silicon dioxide powder of the present invention has a uranium content of 0.8 ppb by mass or less and a sphericity of 0.80 or more. The present invention can provide a silicon dioxide powder having a low uranium content and a high sphericity.

EP 4 299 520 A1

**Description**

Technical Field

The present invention relates to a silicon dioxide powder suitable for use for a semiconductor sealing material.

Background Art

For protection of semiconductors against moisture, gas, and impurities in outer air, semiconductor sealing materials containing a resin and an inorganic filler have been conventionally used to seal the semiconductors. When a semiconductor sealing material has much higher thermal expansion coefficient than the thermal expansion coefficient of a semiconductor, the semiconductor sealed with the semiconductor sealing material may be warped. As a countermeasure for this, it is necessary that the thermal expansion coefficient of the semiconductor sealing material be made closer to the thermal expansion coefficient of the semiconductor. Since the thermal expansion coefficient of the resin is generally higher than the thermal expansion coefficient of the semiconductor, it is necessary that an inorganic filler having a low thermal expansion coefficient be used. Therefore, as an inorganic filler for the semiconductor sealing material, silica, which has the lowest thermal expansion coefficient of industrial materials, has been used.

In order to make the thermal expansion coefficient of the semiconductor sealing material closer to the thermal expansion coefficient of the semiconductor, the filling rate of silica in the semiconductor sealing material needs to be increased. However, when the filling rate of silica is increased, the flowability of the semiconductor sealing material is deteriorated. In order to prevent deteriorated flowability of the semiconductor sealing material when the semiconductor sealing material is filled with silica at a high filling rate, spherical silica having a high sphericity is used as the inorganic filler for the semiconductor sealing material.

In production of micron-order silica, a natural production method using natural silica stone as a raw material is more suitable than a synthetic method using metal silicon, alkoxysilane, or the like as a raw material. However, spherical silica produced from natural silica stone contains a trace of uranium. When the spherical silica contains uranium, an α ray is emitted from the semiconductor sealing material. This α ray causes a memory error of the semiconductor. Therefore, it is preferable that the content of uranium in the spherical silica be low.

As a spherical silica having a high sphericity and a low uranium content, for example, a spherical silica powder having a low uranium content described in PTL 1 has been known in a conventional technology. In the spherical silica powder having a low uranium content described in PTL 1, the content of uranium in the spherical silica is decreased to 0.9 ppb by removing a fine powder having a high uranium content during production of the spherical silica.

Citation List

Patent Literature

PTL 1: JP 11-60234 A

Summary of Invention

Technical Problem

However, in recent years, a semiconductor circuit is complicated, and therefore further suppression in emission of α ray, which causes a memory error of the semiconductor, from a semiconductor sealing material is required. Accordingly, a silicon dioxide powder having a lower uranium content and a high sphericity is desired.

It is an object of the present invention to provide a silicon dioxide powder having a low uranium content and a high sphericity.

Solution to Problem

The present inventors have intensively studied, and found that the problem can be solved by heating silicon dioxide in the presence of halogen.

The present invention has been made on the basis of the findings described above, and includes the following aspects.

[1] A silicon dioxide powder having a uranium content of 0.8 ppb by mass or less and a sphericity of 0.80 or more.
[2] The silicon dioxide powder according to the above [1], having a specific surface area of 2.0 $m^2$/g or more.

[3] The silicon dioxide powder according to the above [1] or [2], wherein in a particle size distribution of the silicon dioxide powder, a particle diameter (d10) corresponding to a cumulative frequency of 10% is 0.1 to 0.5 $\mu$m, a particle diameter (d50) corresponding to a cumulative frequency of 50% is 0.3 to 12.0 $\mu$m, and a particle diameter (d90) corresponding to a cumulative frequency of 90% is 1.5 to 22.0 $\mu$m.

[4] The silicon dioxide powder according to any one of the above [1] to [3], having an iron content of 100 ppm by mass or less in terms of $Fe_2O_3$.

[5] The silicon dioxide powder according to any one of the above [1] to [4], having an aluminum content of 500 ppm by mass or less in terms of $Al_2O_3$.

[6] The silicon dioxide powder according to any one of the above [1] to [5], having a potassium content of 10 ppm by mass or less in terms of $K_2O$.

[7] The silicon dioxide powder according to any one of the above [1] to [6], having a sodium content of 15 ppm by mass or less in terms of $Na_2O$.

[8] The silicon dioxide powder according to any one of the above [1] to [7], having a calcium content of 15 ppm by mass or less in terms of $CaO$.

[9] The silicon dioxide powder according to any one of the above [1] to [8], having a magnesium content of 5 ppm by mass or less in terms of $MgO$.

[10] The silicon dioxide powder according to any one of the above [1] to [9], having a titanium content of 10 ppm by mass or less in terms of $TiO_2$.

Advantageous Effects of Invention

The present invention can provide a silicon dioxide powder having a low uranium content and a high sphericity.

Brief Description of Drawings

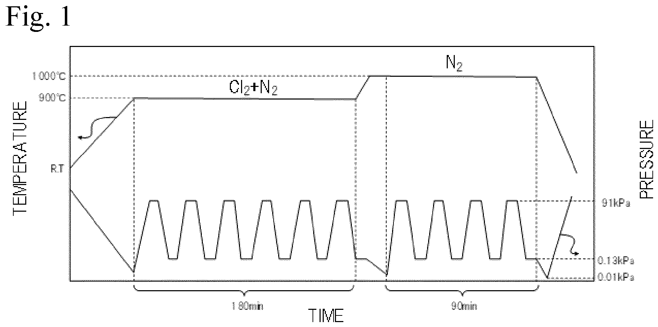

Fig. 1 is a view illustrating an outline of temperature and pressure conditions of chlorination in Examples.

Description of Embodiments

Hereinafter, a silicon dioxide powder of the present invention will be described. The silicon dioxide powder of the present invention has a uranium content of 0.8 ppb by mass or less and a sphericity of 0.80 or more.

(Uranium Content)

The uranium content in the silicon dioxide powder of the present invention is 0.8 ppb by mass or less. When the uranium content in the silicon dioxide powder is more than 0.8 ppb by mass, an $\alpha$ ray may be strongly emitted from a semiconductor sealing material in which the silicon dioxide powder is used. From this viewpoint, the uranium content in the silicon dioxide powder is preferably 0.7 ppb by mass or less, and more preferably 0.6 ppb by mass or less. The lower limit value of the uranium content in the silicon dioxide powder is not particularly limited, and for example, is 0.1 ppb by mass. The uranium content in the silicon dioxide powder can be measured by a method described in Examples described below.

(Sphericity)

The sphericity of the silicon dioxide powder of the present invention is 0.80 or more. When the sphericity of the silicon dioxide powder is less than 0.80, the flowability of the semiconductor sealing material in which the silicon dioxide powder is used may be deteriorated. From this viewpoint, the sphericity of the silicon dioxide powder is preferably 0.82 or more, and more preferably 0.84 or more. The upper limit value of the sphericity of the silicon dioxide powder is usually 1.00. The sphericity of the silicon dioxide powder can be measured by a method described in Examples described below.

(Specific Surface Area)

The specific surface area of the silicon dioxide powder of the present invention is preferably 2.0 $m^2$/g or more. When the specific surface area of the silicon dioxide powder is 2.0 $m^2$/g or more, the silicon dioxide powder that is used for the semiconductor sealing material can be contained at a higher filling rate. From this viewpoint, the specific surface area of the silicon dioxide powder of the present invention is more preferably 4.0 $m^2$/g or more. The specific surface area of the silicon dioxide powder of the present invention is preferably 20 $m^2$/g or less. When the specific surface area of the silicon dioxide powder is 20 $m^2$/g or less, the silicon dioxide powder that is used for the semiconductor sealing material can be more easily mixed with a resin. The specific surface area of the silicon dioxide powder can be measured by a method described in Examples described below. The specific surface area can be adjusted within the aforementioned range by mixing a fine powder and a crude powder.

(d10, d50, and d90)

In the particle size distribution of the silicon dioxide powder of the present invention, a particle diameter (d10) corresponding to a cumulative frequency of 10% is preferably 0.1 to 2.0 $\mu$m, a particle diameter (d50) corresponding to a cumulative frequency of 50% is preferably 0.3 to 12.0 $\mu$m, and a particle diameter (d90) corresponding to a cumulative frequency of 90% is preferably 1.5 to 22.0 $\mu$m. When the silicon dioxide powder has such particle diameters, the silicon dioxide powder that is used for the semiconductor sealing material can be more easily mixed with a resin, and the silicon dioxide powder can be contained at a higher filling rate. From this viewpoint, the particle diameter (d10) corresponding to a cumulative frequency of 10% is more preferably 0.1 to 0.5 $\mu$m, the particle diameter (d50) corresponding to a cumulative frequency of 50% is more preferably 0.3 to 5.0 $\mu$m, 0.3 to 4.0 $\mu$m, or 0.3 to 1.0 $\mu$m, and the particle diameter (d90) corresponding to a cumulative frequency of 90% is more preferably 1.5 to 6.5 $\mu$m, or 1.5 to 3.0 $\mu$m. The particle diameter can be measured by a method described in Examples described below.

(Average Particle Diameter)

The average particle diameter of the silicon dioxide powder of the present invention is preferably 0.3 to 12.0 $\mu$m. When the average particle diameter of the silicon dioxide powder is 0.3 $\mu$m or more, the silicon dioxide powder that is used for the semiconductor sealing material can be more easily mixed with a resin. When the average particle diameter of the silicon dioxide powder is 12.0 $\mu$m or less, the silicon dioxide powder that is used for the semiconductor sealing material can be contained at a higher filling rate. From this viewpoint, the average particle diameter of the silicon dioxide powder of the present invention is more preferably 0.3 to 5.0 $\mu$m, 0.3 to 4.0 $\mu$m, or 0.3 to 1.0 $\mu$m. The average particle diameter of the silicon dioxide powder is the median diameter of particle size distribution measured by a laser diffraction and scattering method (the particle diameter (d50) corresponding to a cumulative frequency of 50%).

A user requirement level for the purity of the silicon dioxide powder is increasingly high. In removement of impurity using a magnet, there is a problem in which a user requirement for the purity of the silicon dioxide powder is not satisfied. Examples of an impurity that is difficult to remove include uranium, titanium, and iron. In the present invention, uranium, titanium, iron, and the like that are impurities can be removed from a silicon dioxide powder to obtain a silicon dioxide powder having a high purity.

(Iron Content)

The iron content in the silicon dioxide powder of the present invention is preferably 100 ppm by mass or less in terms of $Fe_2O_3$. When the iron content is 100 ppm by mass or less in terms of $Fe_2O_3$, occurrence of short circuit defect between wires in a semiconductor, especially an automotive semiconductor, using the semiconductor sealing material in which the silicon dioxide powder is used can be suppressed. A decrease in whiteness of the silicon dioxide powder can also be suppressed. From this viewpoint, the iron content is more preferably 80 ppm by mass or less, and further preferably 50 ppm by mass or less in terms of $Fe_2O_3$. The lower limit value of the iron content is 0 ppm by mass. The iron content can be measured by a measurement method described in Examples described below.

(Aluminum Content)

The aluminum content in the silicon dioxide powder of the present invention is preferably 550 ppm by mass or less or 500 ppm by mass or less in terms of $Al_2O_3$. When the aluminum content is 550 ppm by mass or less in terms of $Al_2O_3$, a decrease in flowability of the semiconductor sealing material in which the silicon dioxide powder is used can be suppressed. From this viewpoint, the aluminum content is more preferably 400 ppm by mass or less, and further preferably 350 ppm by mass or less in terms of $Al_2O_3$. The lower limit value of the aluminum content is 0 ppm by mass. The aluminum content can be measured by a measurement method described in Examples described below.

(Potassium Content)

The potassium content in the silicon dioxide powder of the present invention is preferably 30 ppm by mass or less, 20 ppm by mass or less, or 10 ppm by mass or less in terms of $K_2O$. When the potassium content is 30 ppm by mass or less in terms of $K_2O$, a decrease in moldability of the semiconductor sealing material in which the silicon dioxide powder is used can be suppressed. A decrease in whiteness of the silicon dioxide powder can also be suppressed. The lower limit value of the potassium content is 0 ppm by mass. The potassium content can be measured by a measurement method described in Examples described below.

(Sodium Content)

The sodium content in the silicon dioxide powder of the present invention is preferably 15 ppm by mass or less in terms of $Na_2O$. When the sodium content is 15 ppm by mass or less in terms of $Na_2O$, a delay in curing of the semiconductor sealing material in which the silicon dioxide powder is used can be suppressed. In addition, corrosion of a wire and a decrease in performance of a semiconductor element can be suppressed. The lower limit value of the sodium content is 0 ppm by mass. The sodium content can be measured by a measurement method described in Examples described below.

(Calcium Content)

The calcium content in the silicon dioxide powder of the present invention is preferably 20 ppm by mass or less or 15 ppm by mass or less in terms of CaO. When the calcium content is 15 ppm by mass or less in terms of CaO, a decrease in moldability of the semiconductor sealing material in which the silicon dioxide powder is used can be suppressed. A decrease in whiteness of the silicon dioxide powder can also be suppressed. The lower limit value of the calcium content is 0 ppm by mass. The calcium content can be measured by a measurement method described in Examples described below.

(Magnesium Content)

The magnesium content in the silicon dioxide powder of the present invention is preferably 10 ppm by mass or less or 5 ppm by mass or less in terms of MgO. When the magnesium content is 5 ppm by mass or less in terms of MgO, a decrease in moldability of the semiconductor sealing material in which the silicon dioxide powder is used can be suppressed. A decrease in whiteness of the silicon dioxide powder can also be suppressed. The lower limit value of the magnesium content is 0 ppm by mass. The magnesium content can be measured by a measurement method described in Examples described below.

(Titanium Content)

The titanium content in the silicon dioxide powder of the present invention is preferably 10 ppm by mass or less in terms of $TiO_2$. When the titanium content is 10 ppm by mass or less in terms of $TiO_2$, occurrence of short circuit defect between wires in a semiconductor can be suppressed. The lower limit value of the titanium content is 0 ppm by mass. The titanium content can be measured by a measurement method described in Examples described below.

(Number of Magnetizable Foreign Substance in 50 g of Silicon Dioxide Powder)

The user requirement level for the purity of the silicon dioxide powder is increasingly high. In removement of a magnetizable foreign substance using a magnet, there is a problem in which a user requirement for the purity of the silicon dioxide powder is not satisfied.

The number of magnetizable foreign substances having a particle diameter of 20 to 45 $\mu$m in 50 g of the silicon dioxide powder of the present invention is preferably 200/50 g or less, 150/50 g or less, 100/50 g or less, 50/50 g or less, 25/50 g or less, or 10/50 g or less. When the number of magnetizable foreign substances having a particle diameter of 20 to 45 $\mu$m in 50 g of the silicon dioxide powder is 600/50 g or less per 50 g of the silicon dioxide powder, occurrence of short circuit defect between wires in a semiconductor, especially an automotive semiconductor, using the semiconductor sealing material in which the silicon dioxide powder is used can be suppressed. A decrease in whiteness of the silicon dioxide powder can also be suppressed. The number of magnetizable foreign substances having a particle diameter of 20 to 45 $\mu$m in 50 g of the silicon dioxide powder can be measured by a method described in Examples described below. The number of magnetizable foreign substances having a particle diameter of 45 to 100 $\mu$m in 50 g of the silicon dioxide powder is preferably 50/50 g or less, 40/50 g or less, 30/50 g or less, 20/50 g or less, 10/50 g or less, 5/50 g or less, or 2/50 g or less. The number of magnetizable foreign substances having a particle diameter of 100 to 200 $\mu$m in 50 g of the silicon dioxide powder is preferably 10/50 g or less, 5/50 g or less, 2/50 g or less, 1/50 g or less or 0/50 g. The number of magnetizable foreign substances having a particle diameter of 200 to 275 $\mu$m in 50 g of the silicon dioxide powder is preferably 1/50 g or less, or 0/50 g.

(Ionic Impurity Content)

The $Fe^{2+}$ content in the silicon dioxide powder of the present invention is preferably 15 ppm by mass or less. When the $Fe^{2+}$ content is 15 ppm by mass or less, occurrence of short circuit defect between wires in a semiconductor, especially an automotive semiconductor, using the semiconductor sealing material in which the silicon dioxide powder is used can be suppressed. A decrease in whiteness of the silicon dioxide powder can also be suppressed. The lower limit value of the $Fe^{2+}$ content is 0 ppm by mass. The $Fe^{2+}$ content can be measured by a measurement method described in Examples described below.

The $Na^+$ content in the silicon dioxide powder of the present invention is preferably 10 ppm by mass or less. When the $Na^+$ content is 10 ppm by mass or less, a delay in curing of the semiconductor sealing material in which the silicon dioxide powder is used can be suppressed. In addition, corrosion of a wire and a decrease in performance of a semiconductor element can be suppressed. The lower limit value of the $Na^+$ content is 0 ppm by mass. The $Na^+$ content can be measured by a measurement method described in Examples described below.

The $Cl^-$ content in the silicon dioxide powder of the present invention is preferably 1.0 ppm by mass or less. When the $Cl^-$ content is 1.0 ppm by mass or less, corrosion of a lead wire due to HCl generated when the silicon dioxide powder is used for the semiconductor sealing material can be suppressed. The lower limit value of the $Cl^-$ content is 0 ppm by mass. The $Cl^-$ content can be measured by a measurement method described in Examples described below.

(Method for Producing Silicon Dioxide Powder)

For example, the silicon dioxide powder of the present invention can be produced by the following production method.

A method for producing the silicon dioxide powder includes a step (A) of preparing a silicon dioxide powder raw material, a step (B) of melting the silicon dioxide powder raw material and molding the silicon dioxide powder raw material in a spherical shape to produce an unclassified molten spherical silicon dioxide powder, a step (C) of classifying the unclassified molten spherical silicon dioxide powder to produce a molten spherical silicon dioxide powder with each particle size, a step (D) of blending the molten spherical silicon dioxide powder with each particle size to produce a blend of the molten spherical silicon dioxide powders, a step (E) of chlorinating the blend of the molten spherical silicon dioxide powders, and a step (F) of making the blend into a product.

(Step (A))

In the step (A), a silicon dioxide powder raw material is prepared. Examples of the silicon dioxide powder raw material include a silica stone powder obtained by pulverizing natural silica stone, silica gel synthesized by a wet reaction of alkali silicate with mineral acid, a pulverized product of gel obtained from alkoxysilane by a sol-gel method, and metal silicon particles. Among the silicon dioxide powder raw materials, a pulverized powder of natural silica stone is preferred from the viewpoint of production cost and easy adjustment of particle size of the raw material powder. In order to produce a high-purity silicon dioxide powder from a silica stone powder, a silica stone powder of natural high-purity silica stone in which the purity of $SiO_2$ is 99.5% by mass or more is usually used. However, the natural high-purity silica stone is rare, and therefore a raw material cost is high, and the supply of the raw material may be instable. In this method for producing the silicon dioxide powder, a high-purity silicon dioxide powder can be produced by chlorination described below even when natural silica stone in which the purity of $SiO_2$ is low is used. Therefore, the raw material cost can be decreased.

The silica stone powder that is the silicon dioxide powder raw material is produced, for example, as follows. Silica stone is washed with water, and then pulverized with a pulverizer such as a vibration mill or a ball mill, to produce the silica stone powder. The particle size distribution of the produced silica stone powder is adjusted using a vibration sieve or a classifier.

When the particle diameter of the silicon dioxide powder raw material is adjusted, the specific surface area and particle diameter of the silicon dioxide powder of the present invention can be controlled. The particle diameter, or generally the average particle diameter of the silicon dioxide powder raw material is, for example, 100 $\mu$m or less, and a large amount of fine powder having a particle diameter of 1 $\mu$m or less, in which powders tend to aggregate, may be contained.

(Step (B))

In the step (B), the silicon dioxide powder raw material is molten and made in a spherical shape to produce an unclassified molten spherical silicon dioxide powder. For example, the silicon dioxide powder raw material is sprayed into a flame. As a result, the silicon dioxide powder raw material is molten, and simultaneously made into a spherical shape due to surface tension. Droplets of the silicon dioxide powder raw material passed through the flame are quenched to obtain an unclassified molten spherical silicon dioxide powder that is amorphous spherical silicon dioxide. As a combustion gas for forming the flame, for example, propane, butane, propylene, acetylene, hydrogen, or the like is used, and as a supporting gas, for example, air, oxygen, or the like is used. For example, the flame temperature is 2,000 to 2,400°C.

The sphericity of the unclassified molten spherical silicon dioxide powder can be adjusted, for example, by the heat amount of the flame and the amount of the silicon dioxide powder raw material sprayed. When the heat amount of the flame is insufficient, the silicon dioxide powder raw material is not sufficiently melted and made in a spherical shape, and the sphericity of the unclassified molten spherical silicon dioxide powder is low. When the heat amount of the flame is too high, the production cost of the unclassified molten spherical silicon dioxide powder is high. When the amount of the silicon dioxide powder raw material sprayed is too large, particles are fused after melting, and the sphericity of the unclassified molten spherical silicon dioxide powder is low. When the amount of the silicon dioxide powder raw material sprayed is too small, the production cost of the unclassified molten spherical silicon dioxide powder is high.

(Step (C))

In the step (C), the unclassified molten spherical silicon dioxide powder is classified to produce a molten spherical silicon dioxide powder with each particle size. For example, when the unclassified molten spherical silicon dioxide powder obtained by passing the silicon dioxide powder raw material through a flame is collected, the unclassified molten spherical silicon dioxide powder is classified according to particle size, and collected. A coarse particle may be collected using a gravity setting chamber, a cyclone, or the like. A fine particle may be collected using a bag filter, an electrostatic precipitator, or the like. The classified molten spherical silicon dioxide powder may be then further classified according to particle size using a classifier such as an airflow classifier, a vibration sieve, or a cylindrical sieve.

(Step (D))

In the step (D), the molten spherical silicon dioxide powder with each particle size is blended to produce a blend of the molten spherical silicon dioxide powders. For example, the molten spherical silicon dioxide powders with the particle sizes are blended at such a ratio that the closest packing is achieved by combining the molten spherical silicon dioxide powders with the particle sizes. The blended molten spherical silicon dioxide powders are mixed using a mixer such as a V-shell blender, a double cone blender, or an air blender. Thus, a blend of the highly-filling molten spherical silicon dioxide powders is produced.

(Step (E))

In the step (E), the blend of the molten spherical silicon dioxide powders is chlorinated. Hereinafter, chlorination of the blend of the molten spherical silicon dioxide powders will be described in detail.

The chlorination in the step (E) includes a heating step in the presence of chlorine of heating the blend in the presence of chlorine. Thus, an impurity in the blend is chlorinated to form a chloride, resulting in sublimation. As a result, the impurity is separated from the blend, and the purity of the blend is increased.

The heating temperature in the heating step in the presence of chlorine is not particularly limited as long as it is a temperature at which the impurity is chlorinated in the presence of chlorine to form a chloride and silicon dioxide is not chlorinated as much as possible. When the heating temperature in the heating step in the presence of chlorine is adjusted to a temperature at which a desired impurity is chlorinated to form a chloride, the desired impurity in the blend can be removed from the blend. From the viewpoint of converting the impurity in the blend into a chloride in the presence of chlorine and subliming the chloride and the viewpoint of suppressing chlorination of the silicon dioxide, the heating temperature in the heating step in the presence of chlorine is preferably 400 to 1,200°C, more preferably 430 to 1,100°C, and further preferably 450 to 1,050°C. From the viewpoint of converting the impurity in the blend into a chloride as much as possible and the viewpoint of efficiency of the chlorination, the heating time in the heating step in the presence of chlorine is preferably 1 to 120 minutes, more preferably 1 to 60 minutes, and further preferably 3 to 45 minutes. When a cycle described below is repeated, the heating time is a heating time in a heating step in the presence of chlorine for each cycle. From the viewpoint of subliming the chloride produced by the chlorination of the impurity and the viewpoint of the chlorine amount in an atmosphere, the pressure around the blend in the heating step in the presence of chlorine is preferably 0.0001 to 100 kPa, more preferably 0.0005 to 50 kPa, and further preferably 0.01 to 20 kPa. Since chlorine is corrosive, it is preferable that chlorine be mixed with an inert gas such as nitrogen or argon and supplied. From the viewpoint of converting the impurity in the blend into a chloride, the content of chlorine in the atmosphere around the blend is preferably 30% by volume or more, more preferably 50% by volume or more, and further preferably 80% by volume or more.

From the viewpoint of being capable of removing the impurity in the center of silicon dioxide particles while the form of the silicon dioxide powder is maintained by heating in the presence of chlorine, the average particle diameter of the silicon dioxide powder when the impurity is removed by heating in the presence of chlorine is preferably 0.002 to 100 $\mu$m, more preferably 0.005 to 50 $\mu$m, and further preferably 0.01 to 20 $\mu$m. The average particle diameter of the silicon dioxide powder is the median diameter of particle size distribution measured by a laser diffraction and scattering method.

The chlorination may further include a first heating step under reduced pressure of heating the blend under reduced pressure after the heating step in the presence of chlorine. Thus, the chloride produced by chlorination of the impurity can be more fully sublimed. As a result, the purity of the blend can be further increased. Chlorine remaining in the blend can also be removed from the blend. When the chlorine content in the blend is high, HCl may be produced to corrode a lead wire in a semiconductor sealing material in which the blend is used. From the viewpoint of more fully subliming the chloride produced by the chlorination of the impurity and the viewpoint of a cost required for heating, the heating temperature in the first heating step under reduced pressure is preferably 600 to 1,250°C, more preferably 700 to 1,200°C, and further preferably 800 to 1,150°C. From the viewpoint of more fully subliming the chloride produced by the chlorination of the impurity and the viewpoint of a cost required for reduced pressure, the pressure around the blend, which is absolute pressure, in the first heating step under reduced pressure is preferably 0.0001 to 100 kPa, more preferably 0.0005 to 50 kPa, and further preferably 0.01 to 20 kPa. From the viewpoint of more fully subliming the chloride produced by the chlorination of the impurity and the viewpoint of productivity, the time when a predetermined reduced pressure is maintained in the first heating step under reduced pressure is preferably 5 to 180 minutes, more preferably 10 to 120 minutes, and further preferably 15 to 60 minutes. When the cycle described below is repeated, the time when the predetermined pressure is maintained is a time when a predetermined pressure is maintained in the first heating step under reduced pressure for each cycle.

It is preferable that a cycle including the heating step in the presence of chlorine and the first heating step under reduced pressure be repeated twice or more. In this case, a larger amount of the impurity is separated from the blend, and the purity of the blend is further increased. From the viewpoint of increasing the purity of the blend and the viewpoint of productivity, the cycle including a heating step in the presence of halogen and the first heating step under reduced pressure is repeated preferably 2 to 20 times, more preferably 3 to 15 times, and further preferably 4 to 9 times.

It is preferable that the chlorination further include a heating step in the presence of inert gas of heating the blend in the presence of inert gas. Thus, chlorine remaining in the blend can be fully removed. As a result, the purity of the blend is further increased. Examples of the inert gas include a nitrogen gas and an argon gas. Among the inert gases, a nitrogen gas is preferred from the viewpoint of cost.

The heating temperature in the heating step in the presence of inert gas is preferably higher than the heating temperature in the heating step in the presence of chlorine. However, the heating temperature in the heating step in the presence of inert gas is higher than the heating temperature in a heating step in the presence of halogen preferably by 200°C or lower, more preferably by 100°C or lower, and further preferably by 50°C or lower.

The chlorination may further include a second heating step under reduced pressure of heating the blend under reduced pressure after the heating step in the presence of inert gas. Thus, chlorine remaining in the blend can be fully removed. As a result, the purity of the blend is further increased. From the viewpoint of removing chlorine from the blend and the viewpoint of a cost required for heating, the heating temperature in the second heating step under reduced pressure is preferably 600 to 1,250°C, more preferably 700 to 1,200°C, and further preferably 800 to 1,150°C. From the viewpoint of removing chlorine from the blend and the viewpoint of a cost required for reduced pressure, the pressure around the blend, which is absolute pressure, in the second heating step under reduced pressure is preferably 0.0001 to 100 kPa, more preferably 0.0005 to 50 kPa, and further preferably 0.01 to 20 kPa. From the viewpoint of removing chlorine from the blend and the viewpoint of productivity, the time when a predetermined reduced pressure is maintained in the second heating step under reduced pressure is preferably 5 to 180 minutes, more preferably 10 to 120 minutes, and further preferably 15 to 60 minutes. When the cycle described below is repeated, the time when the predetermined pressure is maintained is a time when a predetermined pressure is maintained in the second heating step under reduced pressure for each cycle.

It is preferable that a cycle including the heating step in the presence of inert gas and the second heating step under reduced pressure be repeated twice or more. Thus, chlorine remaining in the blend can be fully removed, and the purity of the blend can be further increased. From the viewpoint of increasing the purity of the blend and the viewpoint of productivity, the cycle including the heating step in the presence of inert gas and the second heating step under reduced pressure is repeated preferably 2 to 20 times, more preferably 3 to 15 times, and further preferably 5 to 12 times.

(Step (F))

In the step (F), the blend is made into a product. Specifically, the blend is optionally surface-treated with a silane-coupling agent, or subjected to classification in which coarse and large particles are precisely removed. The blend after the step (F) is shipped as a product.

(Semiconductor Sealing Material)

The silicon dioxide powder of the present invention is suitably used in a semiconductor sealing material. The semiconductor sealing material is produced using a resin composition containing the silicon dioxide powder of the present invention and a resin, for example, as follows.

The resin composition is kneaded under heating with a roll, an extruder, or the like, and a kneaded mixture is extended into a sheet shape and cooled. Subsequently, the kneaded mixture is pulverized or cut while the kneaded mixture is linearly extruded and cooled. Thus, a semiconductor sealing material is obtained as a pulverized product. The pulverized product may be molded in a cylindrical shape to form a tablet-shaped semiconductor sealing material, or the pulverized product may be changed in particle size and shape to form a granular semiconductor sealing material.

In order to seal a semiconductor with the semiconductor sealing material, a common molding method such as a transfer molding method or a compression molding method is adopted. For example, in sealing with the semiconductor sealing material through transfer molding, a pot in a die mounted on a transfer molding device is filled with a tablet-shaped semiconductor sealing material, and the semiconductor sealing material is heated, molten, then pressurized with a plunger, and further heated, resulting in curing and sealing. In compression molding, a mold material in which grains of the resin composition are directly placed in a die and molten is molded by slowly applying a pressure to a substrate.

(Resin Composition)

The resin composition used for the semiconductor sealing material contains the silicon dioxide powder of the present invention and a resin as described above. The content of the silicon dioxide powder in the resin composition is preferably 10 to 95% by mass, and more preferably 30 to 90% by mass.

As the resin, a polyamide such as an epoxy resin, a silicone resin, a phenol resin, a melamine resin, a urea resin, an unsaturated polyester, a fluororesin, a polyimide, a polyamideimide, or a polyetherimide; a polyester such as polybutylene terephthalate, or polyethylene terephthalate; a polyphenylenesulfide, an aromatic polyester, a polysulfone, a liquid crystal polymer, a polyethersulfone, a polycarbonate, a maleimide-modified resin, an ABS resin, an acrylonitrile-acrylic rubber-styrene (AAS) resin, an acrylonitrile-ethylenepropylene-diene rubber- styrene (AES) resin, or the like can be used.

Among the resins, an epoxy resin having two or more epoxy groups in the molecule is preferred to prepare the semiconductor sealing material. Examples of the epoxy resin include a biphenyl type epoxy resin, a phenol novolac type epoxy resin, an o-cresol novolac type epoxy resin, an epoxy resin obtained by epoxidation of a novolac resin made of a phenol and an aldehyde, a glycidyl ether such as bisphenol A, bisphenol F, and bisphenol S, a glycidyl ester acid epoxy resin obtained by a reaction of epochlorohydrin with a polybasic acid such as phthalic acid or dimer acid, a linear aliphatic epoxy resin, an alicyclic epoxy resin, a heterocyclic epoxy resin, an alkyl-modified polyfunctional epoxy resin, a $\beta$-naphthol novolac type epoxy resin, a 1,6-dihydroxynaphthalene type epoxy resin, a 2,7-dihydroxynaphthalene type epoxy resin, a bishydroxybiphenyl type epoxy resin, and further an epoxy resin in which halogen such as bromine is introduced to impart flame retardance. Among these, a biphenyl type epoxy resin, an o-cresol novolac type epoxy resin, a bishydroxybiphenyl type epoxy resin, an epoxy resin with a naphthalene skeleton, and the like are suitable in terms of moisture resistance and solder reflow resistance.

When the resin is an epoxy resin, it is preferable that the resin composition contain a curing agent for an epoxy resin, or the curing agent for an epoxy resin and a curing accelerator for the epoxy resin.

Examples of the curing agent for an epoxy resin include various phenol resins; a novolac resin obtained by a reaction of a mixture of one or two or more selected from the group consisting of phenol, cresol, xylenol, resorcinol, chlorophenol, t-butylphenol, nonylphenol, isopropylphenol, octylphenol, and the like with formaldehyde, paraformaldehyde, or paraxylene in an oxidation catalyst; a poly-p-hydroxystyrene resin; bisphenol compounds such as bisphenol A and bisphenol S; trifunctional phenols such as pyrogallol and phloroglucinol; acid anhydrides such as maleic anhydride, phthalic anhydride, and pyromellitic anhydride; and aromatic amines such as m-phenylenediamine, diaminodiphenylmethane, and diaminodiphenyl sulfone.

In order to promote a reaction of the epoxy resin with the curing agent, the above-described curing accelerator can be used. Examples of the curing accelerator include triphenylphosphine, benzyldimethylamine, and 2-methylimidazole.

The resin composition can be produced by blending predetermined amounts of the above-described materials with a blender, a Henschel mixer, or the like, then kneading the mixture with a heating roll, a kneader, a single- or twin-screw extruder, or the like, and cooling the mixture, followed by pulverizing.

Examples

Hereinafter, the present invention will be described in detail by Examples and Comparative Examples. The present invention is not limited to the following Examples.

Silicon dioxide powders in Examples and Comparative Examples were subjected to the following evaluations.

(Particle Diameter)

Using a laser diffraction/scattering particle size distribution measuring device (trade name "CILAS920" manufactured by CILAS) or a particle size distribution measuring device (trade name "LS230" manufactured by Beckman Coulter, Inc.), the particle diameter (d10) corresponding to a cumulative frequency of 10%, the particle diameter (d50) corresponding to a cumulative frequency of 50%, and the particle diameter (d90) corresponding to a cumulative frequency of 90% of a silicon dioxide powder were measured. The particle diameter (d50) corresponding to a cumulative frequency of 50% is an average particle diameter.

(Specific Surface Area)

The specific surface area of the silicon dioxide powder was measured by a BET method using a specific surface area measuring device (trade name "Macsorb HM model-1208" manufactured by MACSORB).

(Sphericity)

Measurement was carried out using a wet flow type particle diameter/shape analyzer (trade name "FPIA-3000" manufactured by Malvern Panalytical Ltd.). A sample was dispersed in pure water, the liquid was then passed through a planar elongational flow cell, and 100 or more particles of amorphous silica powder moving in the cell were recorded with an objective lens to obtain an image. From this record image and the following expression (1), an average circularity was calculated. In the expression (1), HD represents an equivalent circle diameter, which is determined from a ratio of the projected area of a target particle and the area of a perfect circle. PM represents a projected perimeter of the target particle. The average value for 200 silicon dioxide particles thus determined was the average circularity.

$$\text{Expression (1): average circularity} = \pi \cdot \text{HD/PM}$$

From this average circularity, the average sphericity was determined by an expression:

$$\text{average sphericity} = (\text{average circularity})^2.$$

(Uranium (U) Content)

A silicon dioxide powder was decomposed by heat using hydrofluoric acid and nitric acid, to produce a sample solution. The sample solution was subjected to quantitative analysis using an inductively coupled plasma mass spectrometer (manufactured by Hitachi Instruments Service Co., Ltd., measurement limit: 0.01 ppb), and the uranium (U) content was determined.

(Number of Magnetizable Foreign Substance in 50 g of Silicon Dioxide Powder)

50 g of a silicon dioxide powder and 800 g of ion exchanged water were placed in a 1,000-mL beaker to prepare a slurry. While this slurry was inverted with a stirrer at a rotation speed of 550 rpm and intervals of 5 seconds, a bar magnet covered with a 20-$\mu$m rubber cover and having a length of 150 mm, a diameter of 25 mm, and a magnetic force of 12,000 G was immersed in the slurry for 1 minute, to trap magnetized particles. The bar magnet trapping the magnetized particles was taken out from the slurry. Above an empty beaker, the rubber cover was removed, and the magnetized particles were detached while the rubber cover was washed with ion exchanged water. Thus, the magnetized particles were dispersed in water. The obtained dispersion liquid was passed through a suction filtration apparatus equipped with a nylon filter (opening: 13 $\mu$m) having a diameter of 25 mm, to collect the magnetized particles on the nylon filter. The nylon filter in which the magnetized particles were collected was set in a microscope. While the whole region of the filter was shifted at a magnification of 100, the magnetized particles of 20 $\mu$m or more among the magnetized particles collected on the nylon filter were counted.

(Ionic Impurity Content)

<Method for Measuring Fe Ion>

30 mL of aqua regia in which a volume ratio of concentrated nitric acid, concentrated hydrochloric acid, and water was adjusted to 1:5:34 and 5 g of a silicon dioxide powder sample were placed in a 100-mL beaker, and subjected to a heating treatment. After cooling, centrifugation was carried out, and a resultant supernatant liquid was used as a measurement liquid. For this measurement liquid, measurement was carried out with an air-acetylene atomic absorption spectrophotometer. The absorbance at 248.3 nm was measured.

<Method for Measuring Na Ion>

10 g of a silicon dioxide powder sample and 70 mL of ion exchanged water were placed in a container made of PE, and shaken for 1 minute. After that, the container was placed in a dryer, allowed to stand at 95°C for 20 hours, and cooled. Water in an amount of vaporized water was added to adjust the amount of water to the predetermined amount. Subsequently, centrifugation was carried out, and a supernatant liquid was collected as a measurement liquid. For this measurement liquid, measurement was carried out with an air-acetylene atomic absorption spectrophotometer. The absorbance at 589.0 nm was measured.

<Method for Measuring Chlorine Ion>

10 g of a silicon dioxide powder sample and 70 mL of ion exchanged water were placed in a container made of PE, and shaken for 1 minute. After that, the container was placed in a dryer, allowed to stand at 95°C for 20 hours, and cooled. Water in an amount of vaporized water was added to adjust the amount of water to the predetermined amount. Subsequently, centrifugation was carried out, and a supernatant liquid was collected as a measurement liquid. This measurement liquid was subjected to ion chromatography.
A standard stock solution (1,000 ppm) for each of the Fe ion, the Na ion, and the chlorine ion was prepared and diluted to produce a standard solution. From a relationship between the absorbance and the ion concentration thereof, a standard curve was created.

(Aluminum, Iron, Potassium, Sodium, Calcium, Magnesium, and Titanium Contents)

A silicon dioxide powder was decomposed by heat using hydrofluoric acid and nitric acid, to produce a sample solution. The sample solution was subjected to quantitative analysis using an inductively coupled plasma mass spectrometer, and the aluminum content in terms of $Al_2O_3$, the iron content in terms of $Fe_2O_3$, the potassium content in terms of $K_2O$, the sodium content in terms of $Na_2O$, the calcium content in terms of CaO, the magnesium content in terms of MgO, and the titanium content in terms of $TiO_2$, in the silicon dioxide powder were determined.
A silicon dioxide powder was subjected to the following chlorination to produce silicon dioxide powders A to G.
In the chlorination, a chlorine batch kiln (trade name "Model480", manufactured by NORITAKE Co., LIMITED) was used. Fig. 1 illustrates an outline of temperature and pressure conditions of the chlorination. Operation conditions of the chlorination are shown below.

(Operation Conditions of Chlorination)

(Used Gas)

    Purity of chlorine gas supplied to chlorine batch kiln: 100%
    Purity of nitrogen gas supplied to chlorine batch kiln: 99.998%

(Heating Step in Presence of Chlorine)

    Flow rate of chlorine gas supplied to chlorine batch kiln: 5 L/min
    Flow rate of nitrogen gas supplied to chlorine batch kiln: 20 L/min
    Content of chlorine gas in all gases supplied to chlorine batch kiln: 20% by volume

Heating temperature: 900°C
Heating time in heating step in presence of chlorine in one cycle: 5 minutes
Pressure: 91.3 kPa
Notes: At first, the pressure in the batch kiln was reduced to 0.01 kPa, and a chlorine gas and a nitrogen gas were supplied. The temperature increasing rate when the temperature was increased from room temperature to 900°C was 5°C/min.

(First Heating Step under Reduced Pressure)

Heating temperature: 900°C
Pressure: 0.13 kPa
Time when pressure described above was maintained in first heating step under reduced pressure in one cycle: 2 minutes

(Cycle Including Heating Step in Presence of Chlorine and First Heating Step under Reduced Pressure)

Cycle number: 6

(Heating Step in Presence of Inert Gas)

Flow rate of nitrogen gas supplied to chlorine batch kiln: 20 L/min
Heating temperature: 1,000°C
Heating time in heating step in presence of inert gas in one cycle: 5 minutes
Pressure: 91 kPa
Notes: When a step shifted from the first heating step under reduced pressure to the heating step in the presence of inert gas, the pressure in the batch kiln was reduced to 0.01 kPa, a chlorine gas was removed from the batch kiln, and a nitrogen gas was then supplied.

(Second Heating Step under Reduced Pressure)

Heating temperature: 1,000°C
Pressure: 0.13 kPa
Time when pressure described above was maintained in second heating step under reduced pressure in one cycle: 2 minutes

(Cycle Including Heating Step in Presence of Inert Gas and Second Heating Step under Reduced Pressure)

Cycle number: 4
Notes: After 4 cycles, the pressure in the batch kiln was reduced to 0.01 kPa, and then changed to an atmospheric pressure.

The silicon dioxide powders B to G were produced in the same manner as in the case of the silicon dioxide powder A except that a silicon dioxide powder shown in Table 1 was used.
The results are shown in Table 1.

Table 1

| | | Silicon dioxide powder A | | Silicon dioxide powder B | | Silicon dioxide powder C | | Silicon dioxide powder D | | Silicon dioxide powder E | | Silicon dioxide powder F | | Silicon dioxide powder G | |
|---|---|---|---|---|---|---|---|---|---|---|---|---|---|---|---|
| | | Before chlorination | After chlorination | Before chlorination | After chlorination | Before chlorination | After chlorination | Before chlorination | After chlorination | Before chlorination | After chlorination | Before chlorination | After chlorination | Before chlorination | After chlorination |
| | | Comparative Example | | Example | | Example | | Example | | Comparative Example | | Comparative Example | | Comparative Example | |
| | Device | CILAS920 | | COULTER | | COULTER | | CILAS920 | | CILAS920 | | CILAS920 | | CILAS920 | |
| Particle diameter (μm) | d10 | 0.9 | 1.0 | 0.2 | 0.2 | 0.2 | 0.2 | 1.8 | 1.8 | 2.7 | 2.7 | 9.6 | 9.7 | 12.6 | 12.4 |
| | d50 | 12.9 | 12.7 | 0.6 | 0.6 | 0.6 | 0.6 | 3.4 | 3.5 | 10.1 | 10.6 | 22.0 | 20.8 | 25.6 | 23.5 |
| | d90 | 23.7 | 23.6 | 2.1 | 2.1 | 1.8 | 1.8 | 5.9 | 5.9 | 21.1 | 21.4 | 56.3 | 55.0 | 51.1 | 50.2 |
| Specific surface area (m²/g) | | 4.3 | 4.1 | 60 | 5.9 | 5.8 | 5.7 | 3.2 | 3.2 | 2.0 | 2.1 | 1.5 | 1.6 | 1.4 | 1.4 |
| Sphericity | | 0.86 | 0.85 | 0.84 | 0.84 | 0.84 | 0.84 | 0.91 | 0.89 | 0.88 | 0.87 | 0.87 | 0.88 | 0.87 | 0.88 |
| U content (ppb by mass) | | 10.3 | 2.0 | 7.8 | 0.6 | 38 | 0.6 | 20 | 0.8 | 1.9 | 0.9 | 50 | 10.3 | 34 | 12.1 |
| Magnetizable foreign substance (150 g) | 20 to 45 μm | 174 | 18 | 16 | 8 | 86 | 49 | 34 | 38 | 581 | 184 | 870 | 423 | 1488 | 1273 |
| | 45 to 100 μm | 35 | 9 | 3 | 1 | 41 | 39 | 18 | 17 | 40 | 24 | 122 | 59 | 414 | 328 |
| | 100 to 200 μm | 3 | 1 | 0 | 0 | 2 | 3 | 1 | 2 | 2 | 2 | 4 | 3 | 10 | 7 |
| | 200 to 275 μm | 0 | 0 | 0 | 0 | 0 | 0 | 0 | 0 | 0 | 0 | 0 | 0 | 0 | 1 |
| Ionic impurity (ppm by mass) | $Fe^{++}$ | 2.7 | 2.1 | 4.5 | 3.1 | 7.1 | 6.3 | 7.3 | 36 | 2.2 | 2.1 | 1.5 | 18.5 | 2.7 | 2.1 |
| | $Na^+$ | 0.6 | 0.6 | 0.5 | 0.5 | 0.4 | 0.6 | 4.2 | 2.3 | 0.8 | 0.9 | 0.6 | 0.6 | 0.8 | 0.6 |
| | $Cl^-$ | 0.3 | 0.2 | 0.8 | 0.6 | 3.1 | 0.1 | 0.3 | 0.3 | 0.3 | 0.3 | 0.3 | 0.3 | 0.3 | 0.3 |

| Chemical impurity (ppm by mass) | | Silicon dioxide powder A | | Silicon dioxide powder B | | Silicon dioxide powder C | | Silicon dioxide powder D | | Silicon dioxide powder E | | Silicon dioxide powder F | | Silicon dioxide powder G | |
|---|---|---|---|---|---|---|---|---|---|---|---|---|---|---|---|
| | | Before chlorination | After chlorination | Before chlorination | After chlorination | Before chlorination | After chlorination | Before chlorination | After chlorination | Before chlorination | After chlorination | Before chlorination | After chlorination | Before chlorination | After chlorination |
| | | Comparative Example | | Example | | Example | | Example | | Comparative Example | | Comparative Example | | Comparative Example | |
| | $Al_2O_3$ | 1590 | 840 | 290 | 160 | 370 | 310 | 360 | 390 | 1260 | 520 | 1410 | 840 | 1390 | 1360 |
| | $Fe_2O_3$ | 28 | 20 | 103 | 36 | 105 | 59 | 165 | 90 | 44 | 41 | 20 | 20 | 23 | 16 |
| | $K_2O$ | 58 | 48 | 3 | 3 | 2 | 2 | 11 | 10 | 41 | 30 | 39 | 37 | 37 | 27 |
| | $Na_2O$ | 36 | 33 | 2 | 1 | 2 | 2 | 52 | 12 | 40 | 16 | 30 | 22 | 30 | 23 |
| | CaO | 17 | 16 | 15 | 10 | 15 | 12 | 17 | 19 | 18 | 19 | 16 | 13 | 21 | 17 |
| | MgO | 10 | 6 | 5 | 3 | 7 | 2 | 12 | 6 | 16 | 5 | 6 | 6 | 18 | 21 |
| | $TiO_2$ | 19 | 10 | 6 | 1 | 12 | 3 | 6 | 4 | 16 | 8 | 21 | 18 | 23 | 21 |

As shown in Examples above, the silicon dioxide powder having a uranium content of 0.8 ppb by mass or less and a sphericity of 0.80 or more was produced.

**Claims**

1. A silicon dioxide powder having a uranium content of 0.8 ppb by mass or less and a sphericity of 0.80 or more.

2. The silicon dioxide powder according to claim 1, having a specific surface area of 2.0 $m^2$/g or more.

3. The silicon dioxide powder according to claim 1 or 2, wherein in a particle size distribution of the silicon dioxide powder, a particle diameter (d10) corresponding to a cumulative frequency of 10% is 0.1 to 0.5 $\mu$m, a particle diameter (d50) corresponding to a cumulative frequency of 50% is 0.3 to 12.0 $\mu$m, and a particle diameter (d90) corresponding to a cumulative frequency of 90% is 1.5 to 22.0 $\mu$m.

4. The silicon dioxide powder according to any one of claims 1 to 3, having an iron content of 100 ppm by mass or less in terms of $Fe_2O_3$.

5. The silicon dioxide powder according to any one of claims 1 to 4, having an aluminum content of 500 ppm by mass or less in terms of $Al_2O_3$.

6. The silicon dioxide powder according to any one of claims 1 to 5, having a potassium content of 10 ppm by mass or less in terms of $K_2O$.

7. The silicon dioxide powder according to any one of claims 1 to 6, having a sodium content of 15 ppm by mass or less in terms of $Na_2O$.

8. The silicon dioxide powder according to any one of claims 1 to 7, having a calcium content of 15 ppm by mass or less in terms of CaO.

9. The silicon dioxide powder according to any one of claims 1 to 8, having a magnesium content of 5 ppm by mass or less in terms of MgO.

10. The silicon dioxide powder according to any one of claims 1 to 9, having a titanium content of 10 ppm by mass or less in terms of $TiO_2$.

Fig. 1

## INTERNATIONAL SEARCH REPORT

| International application No. |
| --- |
| **PCT/JP2022/013251** |

### A. CLASSIFICATION OF SUBJECT MATTER

*C01B 33/18*(2006.01)i; *C01B 33/12*(2006.01)i
FI: C01B33/18 D; C01B33/12 E

According to International Patent Classification (IPC) or to both national classification and IPC

### B. FIELDS SEARCHED

Minimum documentation searched (classification system followed by classification symbols)

C01B33/18; C01B33/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2018/096876 A1 (TOKUYAMA CORP) 31 May 2018 (2018-05-31)<br>claims, paragraphs [0011], [0131]-[0184] | 1-10 |
| X | JP 7-69617 A (NITTO CHEMICAL INDUSTRY CO LTD) 14 March 1995 (1995-03-14)<br>claims, paragraphs [0045]-[0059] | 1-10 |
| X | WO 2017/188301 A1 (ADMATECHS CO LTD) 02 November 2017 (2017-11-02)<br>paragraphs [0030]-[0036] | 1 |
| A | JP 8-119618 A (DENKI KAGAKU KOGYO KK) 14 May 1996 (1996-05-14)<br>entire text | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 May 2022** | **07 June 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/013251**

| Patent document cited in search report | | | Publication date (day/month/year) | Patent family member(s) | | | Publication date (day/month/year) |
|---|---|---|---|---|---|---|---|
| WO | 2018/096876 | A1 | 31 May 2018 | TW | 201825399 | A | |
| JP | 7-69617 | A | 14 March 1995 | GB | 2279944 | A | |
| | | | | claims, specification, pp. 18-24 | | | |
| | | | | KR | 10-1995-0000563 | A | |
| | | | | TW | 271432 | B | |
| WO | 2017/188301 | A1 | 02 November 2017 | US | 2019/0055132 | A1 | |
| | | | | paragraphs [0036]-[0041] | | | |
| | | | | KR | 10-2018-0105223 | A | |
| | | | | TW | 201741239 | A | |
| JP | 8-119618 | A | 14 May 1996 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11060234 A